# EUROPEAN PATENT APPLICATION

(11) **EP 3 561 651 A1**
(43) Date of publication of application: **30.10.2019**
(21) Application number: 16925029.7
(22) Date of filing: 26.12.2016
(51) Int. Cl.: G06F 3/048, G06F 9/44

(54) **DISPLAY SCREEN CONTROL METHOD AND APPARATUS**

(71) Applicant: Shenzhen Royole Technologies Co., Ltd., Shenzhen, Guangdong 518052 (CN)
(72) Inventor: GU, Xiangnan, Shenzhen Guangdong 518052 (CN); ZHOU, Li, Shenzhen Guangdong 518052 (CN); ZHANG, Xuan, Shenzhen Guangdong 518052 (CN); ZHENG, Liping, Shenzhen Guangdong 518052 (CN)
(74) Representative: Hamer, Christopher K.
(86) International application number: PCT/CN2016/112104
(87) International publication number: WO 2018/119574

(57) **Abstract**

A method and device for controlling a display screen are provided, wherein the method includes: obtaining application deformation parameters of a current application when an application startup event or an application switching event is detected (101); determining screen deformation parameters of the display screen according to the application deformation parameters (102); controlling a mode of the display screen according to the screen deformation parameters (103). The mode of the display screen may be adjusted adaptively according to the application interface, to adjust the mode of the display screen conveniently and accurately.

## Description

### TECHNICAL FIELD

This disclosure relates to the field of electronic technology, and more particularly relates to a method and device for controlling a display screen.

### BACKGROUND

Flexible display screens are deformable display devices with advantages including small size, good portability, excellent image quality, and diversified displaying. In view of the above advantages, flexible display screens have been widely used in the industry, and are gradually applied to various types of terminal devices, such as smart phones, tablet computers, smart wearable devices, smart televisions, and the like.

At present, the flexible display screens may be stretched out and drawn back under controlled of physical buttons and/or software instructions, thereby decreasing power consumption or guaranteeing displaying effect. However, the above operations are cumbersome in practical. Moreover, it may be difficult for the users to obtain desired lengthen and shorten effect after several operations.

### SUMMARY

Embodiments of the disclosure provide a method and device for controlling a display screen to adjust a mode of the display screen according to an application interface, thereby to control the mode of the display screen conveniently and accurately.

According to a first aspect, the embodiments of the present disclosure provide a method for controlling a display screen, comprising:
obtaining application interface deformation parameters of a current application when an application startup event or an application switching event is detected;
determining screen deformation parameters of the display screen according to the application interface deformation parameters; and
controlling a mode of the display screen according to the screen deformation parameters.

According to a second aspect, the embodiments of the present disclosure provide a device for controlling a display screen, comprising:
a detecting module, configured to detect an application startup event or an application switching event of a current application;
an obtaining module, configured to obtain application interface deformation parameters when the detecting module detects the application startup event or the application switching event;
a determining module, configured to determine screen deformation parameters of the display screen according to the application interface deformation parameters; and
a controlling module, configured to control a mode of the display screen according to the screen deformation parameters.

In the embodiment of the present disclosure, the application interface deformation parameters of the current application can be obtained when the application startup event or the application switching event is detected, and the screen deformation parameters of the display screen can be determined according to the application interface deformation parameters. Accordingly, the mode of the display screen can be controlled according to the screen deformation parameters. Thus, the mode of the display screen can be adjusted according the application interface, to control the mode of the display screen conveniently and accurately.

### BRIEF DESCRIPTION OF THE ACCOMPANYING DRAWINGS

To describe the technology solutions in the embodiments of the present disclosure more clearly, the following briefly introduces the accompanying drawings required for describing the embodiments. Apparently, the accompanying drawings in the following description show merely some embodiments of the present disclosure, Those of ordinary skill in the art may also derive other obvious variations based on these accompanying drawings without creative efforts.
FIG. 1 is a flow chart schematic diagram of a method for controlling a display screen, in accordance with an embodiment of the present disclosure.;
FIG. 2A is a schematic diagram of an application interface displayed in the display screen, in accordance with an embodiment of the present disclosure.;
FIG. 2B is a schematic diagram of an application interface displayed in the display screen, in accordance with an another embodiment of the present disclosure.;
FIG. 2C is a schematic diagram of operating an application interface displayed in the display screen, in accordance with an embodiment of the present disclosure.;
FIG. 2D is a schematic diagram of operating an application interface displayed in the display screen, in accordance with an another embodiment of the present disclosure.;
FIG. 2E is a schematic diagram of operating an application interface displayed in the display screen, in accordance with an another embodiment of the present disclosure.;
FIG. 2F is a schematic diagram of operating an application interface displayed in the display screen, in accordance with an another embodiment of the present disclosure;
FIG. 3 is a structural diagram illustrating a device of a display screen, in accordance with an embodiment of the present disclosure.

### DETAILED DESCRIPTION OF ILLUSTRATED EMBODIMENTS

The technical solution in the embodiments of the present disclosure will be described clearly and completely hereinafter with reference to the accompanying drawings in the embodiments of the present disclosure. Apparently, the described embodiments are merely some but not all embodiments of the present disclosure. All other embodiments obtained by a person of ordinary skill in the art based on the embodiments of the present disclosure without creative efforts shall fall within the protection scope of the present disclosure.

A terminal device of the present disclosure may include, but not limited to, a smart phone, a tablet computer, a smart wearable device, a vehicle terminal, and the like which are equipped with flexible display screens.

A display screen of the present disclosure may be a flexible display screen, such as an OELD (Organic Light-Emitting Diode) flexible display screen, which is capable of being deformed freely, to achieve changes in size, shape and the like.

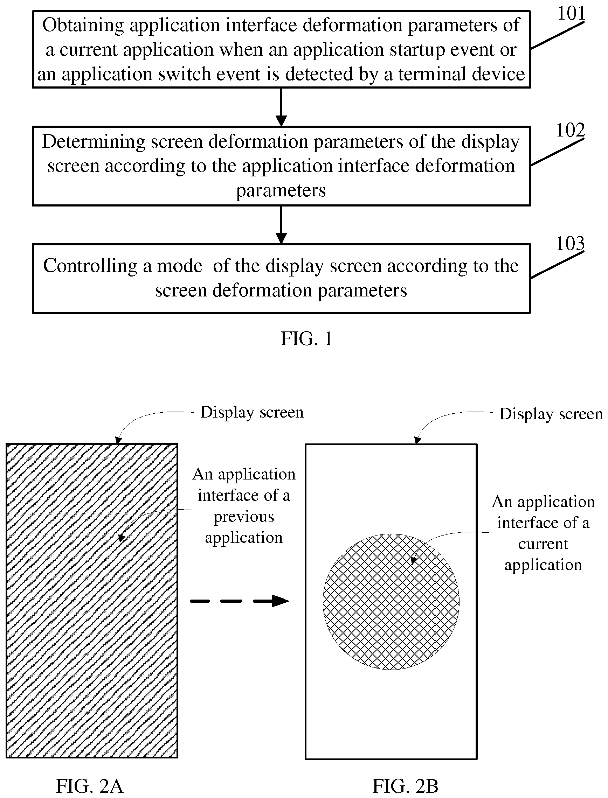

Referring to FIG. 1, which illustrates one embodiment of the present disclosure of a flow chart schematic diagram of a method for controlling the display screen. The method for controlling the display screen of the present embodiment includes:

At block 101, a terminal device obtains application interface deformation parameters of a current application when the terminal device detects an application startup even or an application switching event.

Therein, the application interface deformation parameters may include at least one of sizes, shapes, position coordinates, a deformation speed, and the like. The application interface deformation parameters are configured to represent a display space occupied by an application interface of the application. The display space includes parameters of sizes (such as length, width, diameter, etc.), shapes (such as rectangles, circles, etc.), position coordinates, and the like. The deformation speed represents a changing speed of the application interface changed from the application interface of a previous application to the application interface of the current application.

In one implementation, a system of the terminal device may establish a detecting mechanism to detect the application startup event or the application switching event. When the terminal device detects the application startup event or the application switching event via the detecting mechanism, the terminal device obtains the current application that has been started or already-switched, and obtains the application interface deformation parameters of the current application from an application interface deformation parameters group prestored in the terminal device.

Additionally, after the terminal device obtains the application interface deformation parameters, the terminal device displays the application interface of the current application in the display screen according to the application interface deformation parameters, which may specifically include: adjusting the sizes, shapes, and the position coordinates of the application interface displayed on the terminal device before detecting the application startup event or the application switching event (which may be the previous application or an application interface of a system desktop), to the sizes, the shapes, and the position coordinates in the application interface deformation parameters of the current application, by changing a root layout of the application interface of the previous application according to the deformation speed of the application interface deformation parameters. Therefore, the terminal device may display the application interface of the current application in the display screen, and render relative content of the current application in the application interface of the current application. For example, the terminal device can change a rectangle application interface of the previous application shown in FIG. 2A to a circle application interface of the current application shown in FIG. 2B, according to the sizes, the shapes, the position coordinates, the deformation speed, and the like of the application interface deformation parameters of the current application.

It should be noted that the application interface of the present disclosure is fulfilled in the display screen in one embodiment. Furthermore, the display screen can be slightly bigger or slightly smaller than the application interface in other embodiments.

In some embodiments, the application interface deformation parameter group may be stored in a launcher or a shared file. A method that the terminal device obtains the application interface deformation parameters of the current application can include: the terminal device determines that whether the current application is a startup application or an already-switched application (the already-switched application is the application being switched to the foreground from background). If the current application is the startup application, the terminal device obtains the application interface deformation parameters from the launcher. If the current application is the already-switched application, the terminal device obtains the application interface deformation parameters from the shared file.

In some embodiments, if neither the launcher nor the shared file stores the application interface deformation parameters of the current application, the terminal device may output a setting prompt corresponding to the application interface deformation parameters of the current application, the terminal device receives the application interface deformation parameters of the current application input from a user according to the setting prompt, and stores the application interface deformation parameters input by the user into the launcher, or the shared file, or both the launcher and the shared file.

At block 102, the terminal device determines screen deformation parameters of the display screen according to the application interface deformation parameters.

Therein, the screen deformation parameters can include at least one of sizes, shapes, position coordinates, deformation speeds, and the like. The screen deformation parameters are configured to identify the display screen to be adjusted to the parameters of sizes (such as length, width, diameter, etc.), shapes (such as rectangles, circles, etc.), position coordinates. The deformation speed represents a changing speed of adjusting the display screen.

In one implementation, the terminal device may directly set the application interface deformation parameters of the present application as the display deformation parameters of the display screen. That is, the sizes, the shapes, the position coordinates, and the deformation speed of the screen deformation parameters are the same as the sizes, the shapes, the position coordinates, and the deformation speed of the application interface deformation parameters of the current application. Or the sizes, the shapes, the position coordinates, and the deformation speed of the screen deformation parameters are proportional to the sizes, the shapes, the position coordinates, and the deformation speed of the application interface deformation parameters of the current application in a certain range.

At block 103, the terminal device controls a mode of the display screen according to the screen deformation parameters.

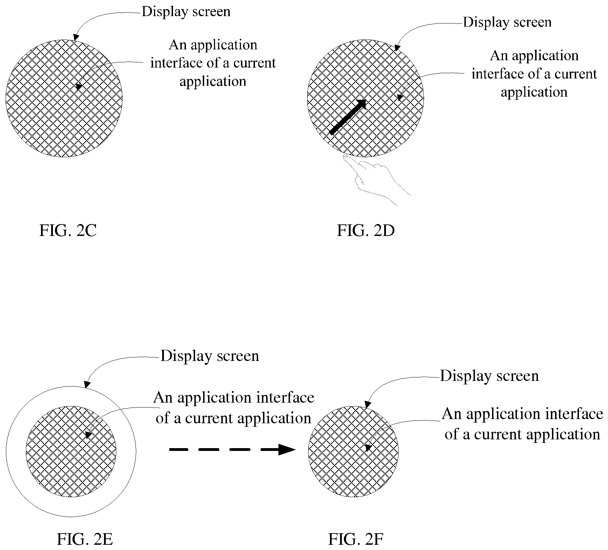

In one implementation, the terminal device transmits the screen deformation parameters to a system driver layer through a system middle layer (such as the framework layer). Specifically, the system middle layer transfers the sizes and the shapes of the screen deformation parameters to a first driver interface being capable of controlling the sizes and the shapes of the display screen, of the system driver layer, and transfers the deformation speed of the screen deformation parameters to a second driver interface being capable of controlling the deformation speed of the display screen, of the system driver layer. Thus, the system driver layer may adjust the sizes and shapes of the display screen to the sizes and shapes of the screen deformation parameters by utilizing the first driving interface, and control the deformation speed of the display screen by utilizing the second driving interface, according to the position coordinates of the screen deformation parameters. Accordingly, the terminal device may complete the control of the mode of the display screen, thereby obtaining a display screen mode matching the application interface of the current application, as shown in FIG. 2C.

Furthermore, after the mode of the display screen is adjusted completely, the system driver layer can transmit a mode changing result (including the sizes, the shapes, the position coordinates, etc.) to an application layer of the current application. When the application layer determines that the mode changing result does not match the application interface deformation parameters of the current application, the terminal device may inform the system driver layer to adjust the mode of the display screen according to the screen deformation parameters, again. Or, the terminal device can output a prompt information of display mode changing abnormal information, to indicate the user to adjust the mode of the display screen manually. Or, the terminal device can be rebooted, etc..

For example, when the current application is a reader application, the mode of the display screen can be adjusted to a book size. When the current application is a clock application, the mode of the display screen can be adjusted to a size and sharp of a watch. When the current application is a ruler application, the mode of the display screen can be adjusted to a long strip. When the current application is a music player application, the mode of the display screen can be adjusted to a size of a strip line. When the current application is a video player application, the mode of the display screen can be adjusted to a rectangle with a predefined ratio of length to width, and the like.

In some embodiments, if the user is unsatisfied with the mode of the display screen adjusted according to the screen deformation parameters, the user can adjust the application interface and the mode of the display screen manually. For example, the user can adjust the size of the application interface and the display screen, by inputting a pressing operation or sliding operation in a specified area of the application interface or a boundary area of the application interface, or inputting a voice command, to adjust the size of the application interface. Thus, the terminal device may adjust the size of the display screen according to a size adjusting amount of the application interface. As illustrated in FIG. 2D, the user may slide to an inside of the display screen from the boundary area of the application interface. The terminal device determines to decrease the size of the application interface (i.e., a diameter of the circular application interface) according to the sliding direction. FIG. 2E illustrates an adjusted application interface and the display screen after the terminal device decreases the size of the application interface. The terminal device decreases the size of the display screen to make the size of the display screen being matched with that of the application interface of the adjusted application. And the final result may be shown as in FIG. 2F. Therein, the size adjusting amount can be calculated with a sliding distance and corresponding relationships between the adjusting amount of the size, and the sliding distance is not limited in the embodiment of the present disclosure.

Furthermore, referring to FIG. 2D, the user may press heavily at the boundary area of the application interface (such as with a pressing force reaching a predefined value) for a pressing duration with a certain value, to increasing the size of the application interface (i.e., increasing the diameter of the circular application interface). The terminal device may determine the size adjusting amount of the application interface according to at least one of the pressing force and the pressing duration. Specifically, the terminal device may increase the size of the display screen according to the size adjusting amount of the application interface, and then increase the size of the application interface, correspondingly. In other embodiments, the terminal device may increase the size of the application interface, and then increase the size of the display screen according to the size adjusting amount of the application interface. Accordingly, an enlarged application interface can be fulfilled in an enlarged display screen.

In the embodiment of the present disclosure, the terminal device obtains the application interface deformation parameters of the current application when the application startup event or application switching event is detected, and determines the screen deformation parameters of the display screen according to the application interface deformation parameters, thereby the mode of the display screen can be controlled according to the screen deformation parameters. The terminal device may adaptively adjust the mode of the display screen conveniently and accurately, thereby improving the practicality of the display screen and the user experience.

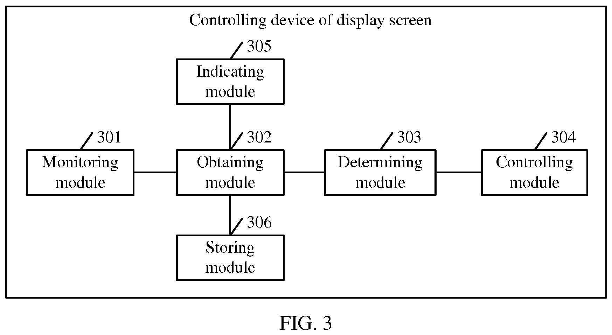

Referring to FIG. 3, which illustrates one embodiment of the present disclosure of a structural diagram illustrating a device for controlling a display screen. The device for controlling the display screen of the present disclosure includes:

A monitoring module 301 is configured to detect an application startup event or an application switching event.

An obtaining module 302 is configured to obtain application deformation parameters of a current application when the monitoring module 301 detects the application startup event or the application switching event.

In one embodiment, the monitoring module 301 may establish a detecting mechanism, to detect the application startup event or the application switching event. When the monitoring module 301 detects the application startup event or the application switching event via the detecting mechanism, the obtaining module 302 obtains the current application that has been started or already-switched, and the obtaining module 302 obtains the application interface deformation parameters of the current application from an application interface deformation parameters group prestored in the terminal device.

A determining module 303 is configured to determine screen deformation parameters of the display screen according to the application interface deformation parameters.

Therein, the screen deformation parameters include at least one of the sizes, shapes, position coordinate, and a deformation speed. The screen deformation parameters are configured to identify the display screen to be adjusted to the parameters of sizes (such as length, width, diameter, etc.), shapes (such as rectangles, circles, etc.), position coordinates. The deformation speed represents a changing speed of adjusting the display screen.

In one implementation, the determining module 303 can directly set the application interface deformation parameters of the present application as the display deformation parameters of the display screen. That is, the sizes, the shapes, the position coordinates, and the deformation speed of the screen deformation parameters are the same as the sizes, the shapes, the position coordinates, and the deformation speed of the application interface deformation parameters of the current application, respectively.

A controlling module 304 is configured to control a mode of the display screen according to the screen deformation parameters.

In one implementation, the controlling module 304 transmits the screen deformation parameters to a system driver layer through a system middle layer (such as the framework layer). Specifically, the system middle layer transfers the sizes and shapes of the screen deformation parameters to a first driver interface being capable of controlling the sizes and the shapes of the display screen, of the system driver layer, and transfers the deformation speed of the screen deformation parameters to a second driver interface being capable of controlling the deformation speed of the display screen, of the system driver layer. Thus, the system driver layer may adjust the sizes and shapes of the display screen to the sizes and shapes of the screen deformation parameters by utilizing the first driver interface, and control the deformation speed of the display screen by utilizing the second driver interface, according to the position coordinates of the screen deformation parameters. Accordingly, the controlling module 304 may complete the control of the mode of the display screen, to obtain a display mode corresponding to the application interface of the current application.

In other embodiments, the obtaining module 302 is configured to:
When the monitoring module 301 detects the application startup event or the application switching event, and if the current application is a startup application, the obtaining module 302 obtains the application interface deformation parameters from a launcher.

If the current application is an already-switched application, the obtaining module 302 obtains the application interface deformation parameters from a shared file.

In other embodiments, the device further includes a indicating module 305 and a storing module 306, therein:
The indicating module 305 is configured to output a setting prompt corresponding to the application interface deformation parameters of the current application, when neither the launcher nor the shared file stores the application interface deformation parameters of the current application.

The obtaining module 302 is further configured to obtain application interface deformation parameters of the current application input from a user in response to the setting prompt.

The storing module 306 is configured to store the application interface deformation parameters input by the user in the launcher or the shared file.

In other embodiments, the determining module 303 is configured to:
Set the application deformation parameters as the screen deformation parameter of the display screen.

In other embodiments, the controlling module 304 is configured to:
Transmit, via a system middle layer, the screen deformation parameters to a system driver layer.

Invoke, through the system driver layer, a driver interface of the display screen to driver the display screen to be adjusted according to the screen deformation parameters.

In one embodiment, the application interface deformation parameters include at least one of sizes, shapes, position coordinates and a deformation speed.

In one embodiment, the screen deformation parameters include at least one of sizes, shapes, position coordinates and a deformation speed.

In one embodiment, the display screen is a flexible display screen.

It is to be understood that the functions of the functional modules of the controlling device of the display device can be specifically implemented according to the foregoing method embodiments, and the specific implementation methods can refer to a related description of the foregoing method embodiment.

In one embodiment of the present disclosure, when the monitoring module 301 detects the application startup event or the application switching event, the obtaining module 302 obtains the application interface deformation parameters of the current application, the determining module 303 determines the screen deformation parameters of the display screen according to the application interface deformation parameters. Thus, the controlling module 304 adjusts the mode of the display screen according to the screen deformation parameters, thereby the mode of the display screen being controlled according to the screen deformation parameters. Thus, the mode of the display screen being adjusted conveniently and accurately may be achieved, and practicality of the display screen and the user experience can be improved.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps may be performed in other order or simultaneously. Besides, it will be appreciated by those skilled in the art that the embodiments described in the specification are exemplary embodiments and the actions and modules involved are not necessarily essential to the present disclosure.

It will be understood by those of ordinary skill in the art that all or part of the operations of the various methods of the embodiments described above may be accomplished by means of a program to instruct associated hardware. The program may be stored in a computer-readable memory, which may include a flash memory, a read-only memory (ROM), a random-access memory (RAM), a disk or a compact disc (CD), and so on.

The above is a preferred embodiment of the present disclosure, and it should be noted that those skilled in the art may make some improvements and modifications without departing from the principle of the present disclosure, and these improvements and modifications also are the protection scope of the present disclosure.

## Claims

1. A method for controlling a display screen, the method comprising:
obtaining application deformation parameters of a current application when an application startup event or an application switching event is detected;
determining screen deformation parameters of the display screen according to the application deformation parameters; and
controlling a mode of the display screen according to the screen deformation parameters.

2. The method of claim 1, wherein obtaining application deformation parameters of the current application when the application startup event or the application switching event is detected, comprises:
reading the application interface deformation parameters of the current application from a launcher in response to the current application being a startup application;
reading the application interface deformation parameters of the current application from a shared file in response to the current application being an already-switched application.

3. The method of claim 2, the method further comprising:
outputting a setting prompt corresponding to the application interface deformation parameters of the current application if neither the launcher nor the shared file stores the application interface deformation parameters of the current application;
obtaining application interface deformation parameters of the current application input in response to the setting prompt; and
storing the application interface deformation parameters in the launcher or the shared file.

4. The method of claim 1, wherein determining the screen deformation parameters of the display screen according to the application deformation parameters comprises:
setting the application interface deformation parameters as the screen deformation parameters of the display screen.

5. The method of claim 1, wherein controlling the mode of the display screen according to the screen deformation parameters comprises:
transmitting, through a system middle layer, the screen deformation parameters to a system driver layer;
invoking, through the system driver layer, a driver interface of the display screen to driver the display screen to deform according to the screen deformation parameters.

6. The method of claim 1, wherein the application interface deformation parameters comprise at least one of sizes, shapes, position coordinates, and a deformation speed.

7. The method of claim 1, wherein the screen deformation parameters comprise at least one of sizes, shapes, position coordinates, and a deformation speed.

8. The method of claim 1, wherein the display screen is a flexible display screen.

9. A device for controlling a display screen, the device comprising:
a detecting module, configured to detect an application startup event or an application switching event of a current application;
an obtaining module, configured to obtain application deformation parameters of the current application when the detecting module detects the application startup event or the application switching event;
a determining module, configured to determine screen deformation parameters of the display screen according to the application deformation parameters; and
a controlling module, configured to control a mode of the display screen according to the screen deformation parameters.

10. The device of claim 9, wherein the obtaining module is configured to:
when the application startup event or the application switching event is detected,
read the application interface deformation parameters of the current application from a launcher in response to the current application being a startup application;
read the application interface deformation parameters of the current application from a shared file in response to the current application being an already-switched application.

11. The device of claim 10, wherein the device further comprises an indicating module and a storing module, wherein:
the indicating module is configured to output a setting prompt corresponding to the application interface deformation parameters of the current application if neither the launcher nor the shared file stores the application interface deformation parameters of the current application;
the obtaining module is further configured to obtain an application interface deformation parameters of the current application input in response to the setting prompt; and
the storing module is configured to store the application interface deformation parameters in the launcher or the shared file.

12. The device of any one of claims 9 to 11, wherein the determining module is configured to:
set the application interface deformation parameters as the screen deformation parameters of the display screen.

13. The device of claim 9, wherein the controlling module is configured to:
transmit, through a system middle layer, the screen deformation parameters to a system driver layer;
invoke, through the system driver layer, a driver interface of the display screen to driver the display screen to deform according to the screen deformation parameters.

14. The device of claim 9, wherein the application interface deformation parameters comprise at least one of sizes, shapes, position coordinates, and a deformation speed.

15. The device of claim 9, wherein the screen deformation parameters comprise at least one of sizes, shapes, position coordinates, and a deformation speed.

16. The device of claim 9, wherein the display screen is a flexible display screen.
